(19) Europäisches Patentamt
European Patent Office
Office européen des brevets

(11) **EP 4 606 533 A1**

(12) **EUROPEAN PATENT APPLICATION**

(43) Date of publication:
**27.08.2025 Bulletin 2025/35**

(21) Application number: **24158595.9**

(22) Date of filing: **20.02.2024**

(51) International Patent Classification (IPC):
***B25J 9/16*** (2006.01)

(52) Cooperative Patent Classification (CPC):
**B25J 9/1697; B25J 9/161; B25J 9/1687;**
G05B 2219/39161; G05B 2219/40006;
G05B 2219/40053; G05B 2219/45063

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **SATHYA NARAYANAN, Gokul Narayanan**
**Emeryville, CA, 94608 (US)**
• **ERDOGAN, Husnu Melih**
**Berkeley, CA, 94703 (US)**
• **SHAHAPURKAR, Yash**
**Berkeley, CA, 94704 (US)**

• **ZHU, Brian**
**Emeryville, CA, 94608 (US)**
• **UGALDE DIAZ, Ines**
**Redwood City, CA, 94061 (US)**
• **COELHO, Kyle**
**Emeryville, CA, 94608 (US)**
• **SOLOWJOW, Eugen**
**Berkeley, CA, 94709 (US)**
• **BATSII, Paul Andreas**
**83233 Bernau a. Chiemsee (DE)**
• **SCHÜTTE, Christopher**
**90461 Nürnberg (DE)**

(74) Representative: **HKW Intellectual Property PartG
mbB**
**Theresienhöhe 12**
**80339 München (DE)**

(54) **PLACE CONDITIONED PICK FOR ROBOTIC PICK AND PLACE OPERATIONS**

(57)     A method for performing placement informed robotic picking of objects includes acquiring a first image (302) of a pick scene (220) including a number of objects (218) and acquiring a second image (308) of a placement area (224) that receives objects picked from the pick scene (220) by a robot (202). Object masks (306) are computed by performing instance segmentation based on the first image (302). Place region masks (312) are computed by clustering locations in the second image (312) based on a height level from a floor of the placement area (224). A cost is computed for respective object-region pairs (306, 312), each object-region pair (306, 312) defining a pairing between an object mask (306) and a place region mask (312). The cost is defined at least in part by a place constraint. An object (218) is selected to be picked from the pick scene (220) by the robot by selecting an object-region pair ($306_{Sel}$, $312_{Sel}$) based on the computed cost.

FIG. 3

EP 4 606 533 A1

**Description**

TECHNICAL FIELD

The present disclosure relates generally to robotics in industrial automation tasks, and in particular, to systems and methods for enabling placement informed picking for robotic pick and place operations.

BACKGROUND

Bin picking and packing are common operations in industrial warehouse automation, which are traditionally performed by humans due to the randomness and variability of objects being handled. With recent advances in machine learning, 3D vision and robotics, these tasks are increasingly being transformed to be handled by autonomous robot systems to enable flexibility and higher performance.

An autonomous robotic pick system may include one or more RGB-D cameras, that collect both color pictures and depth maps or point-clouds of pick scenes with objects in random configurations. The camera input may be transferred to computer vision algorithms or deep neural networks that have been trained to select an object and compute robotic grasping locations or "pick points" on the selected object based on the camera input. Once the selected object has been successfully picked, information on the picked object (e.g., dimensions) may be passed along to a place system. The place system may subsequently determine a placement pose for placing the picked object within a place bin, based on the picked object's dimensions, state information of the place bin (e.g., obtained from an image of the place bin), and taking into consideration factors such as higher space utilization and packing stability.

In the described state of the art, the pick and the place systems typically have limited interaction. This can potentially lead to inefficient space utilization and other issues with arranging objects in the most optimal manner within the place bin, especially for tight bin packing applications. Improved systems are desirable.

SUMMARY

Aspects of this disclosure address and overcome one or more of the described-herein shortcomings by providing methods, systems, and computer program products that enable a robotic pick system to make informed decisions about which object to pick from a pick scene by utilizing information about the placement area as well.

A first aspect of this disclosure provides a method for performing placement informed robotic picking of objects. The method comprises acquiring a first image of a including a number of objects and acquiring a second image of a placement area configured to receive objects selectively picked from the pick scene by a robotic end effector. The method comprises, based on the first image, computing object masks by performing instance segmentation, wherein each object mask represents a particular object detected in the pick scene. The method further comprises, based on the second image, computing place region masks by clustering locations in the second image based on a height level from a floor of the placement area, wherein each place region mask represents a surface at a specific height level. The method further comprises, based on the computed object masks and place region masks, computing a cost for respective object-region pairs, each object-region pair defining a pairing between an object mask and a place region mask, the cost defined at least in part by one or more place constraints. The method further comprises selecting an object to be picked from the pick scene by the robotic end effector by selecting an object-region pair based on the computed cost.

The method allows for a better integration between the pick and place processes, leading to more efficient object selection and placement.

Further aspects of this disclosure provide autonomous systems and computer program products for implementing the above-described method.

Additional technical features and benefits may be realized through the techniques of the present disclosure. Embodiments and aspects of the disclosure are described in detail herein and are considered a part of the claimed subject matter. For a better understanding, refer to the detailed description and to the drawings.

BRIEF DESCRIPTION OF THE DRAWINGS

The foregoing and other aspects of the present disclosure are best understood from the following detailed description when read in connection with the accompanying drawings. To easily identify the discussion of any element or act, the most significant digit or digits in a reference number refer to the figure number in which the element or act is first introduced.

FIG. 1 illustrates a pick and place scenario wherein aspects of the present disclosure can be suitably implemented.

FIG. 2 schematically illustrates an autonomous system configured for performing placement informed robotic picking of objects according to one or more embodiments.

FIG. 3 illustrates a pick and place workflow according to one or more embodiments.

FIG. 4 illustrates object masks computed from a pick bin image.

FIG. 5 illustrates place region masks computed from a place bin image.

FIG. 6 is a flowchart illustrating a process executed by an object selector according to one or more embodiments.

FIG. 7 illustrates area utilization of region masks by an object mask.

FIG. 8 illustrates a computing system that can support placement informed robotic picking of objects according to disclosed embodiments.

DETAILED DESCRIPTION

It is recognized that at present, picking and placing are typically considered individual processes of a robotic pick and place pipeline, and as such, are addressed separately. For example, the pick process may analyze images of a pick bin to select the optimal object for picking, a decision guided by pick constraints such as the type of gripper and stable grasp conditions (e.g., avoiding picking of occluded objects, collision of gripper with sides of the bin, etc.). This approach may significantly enhance the efficiency of bin picking in terms of cycle time and the success rate of picks. If the subsequent place task involves placing the object on a conveyor or simply dropping it into a bin or container, the decision regarding which object to select may not take into account any place constraints. The interdependence between the pick and place processes can be minimal in such use-cases. However, in certain use-cases, particularly for tight bin packing, the subsequent placing task can be influenced to a certain extent by the pick process. This is because the pick process determines which object is to be selected from the pick bin, and the place process is responsible for estimating an optimal placement pose based on that selected object, taking into account place constraints such as area utilization, stability, etc. to achieve efficient packing.

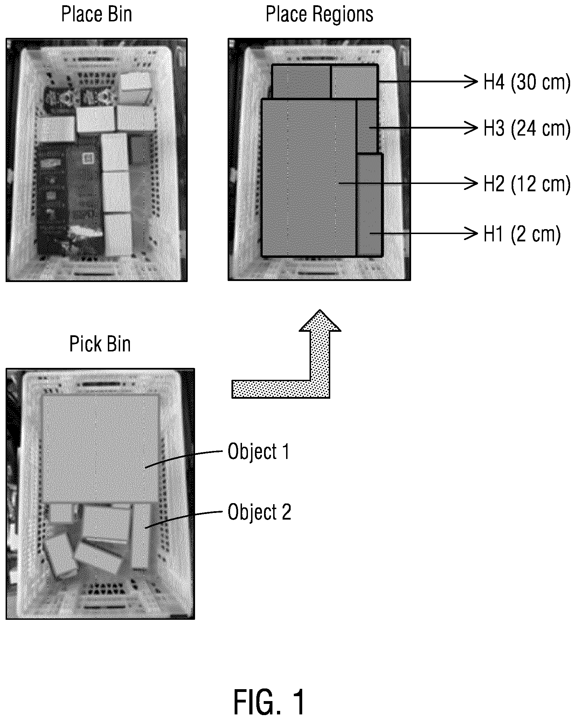

FIG. 1 shows an illustrative pick and place scenario for a tight bin packing use-case. The task involves picking objects in a singulated manner from a pick bin and placing them in a place bin to achieve tight packing of the placed objects. The place regions H1, H2, H3, H4..., on the top right of FIG. 1, represent respective surfaces at specific height levels from the floor of the place bin (e.g., derived from a segmented depth map of the place bin). In the shown scenario, the pick process may select object1 from the pick bin, if the decision is simply guided by pick constraints (typically larger un-occluded objects are picked first). The place process is then restricted to placing object1 on the surface H2. This is because the surface H2 provides the most substantial base support for object1. However, when object 1 is positioned on the surface H2, the surface H1 (which is at a lower height level) becomes inaccessible as it is partially obscured by object1. Instead, if the pick process had selected object2, it could have been appropriately placed on the surface H1, facilitating efficient packing and effective use of space in the place bin.

The above scenario highlights the shortcomings of pick and place processes operating in isolation. The two processes don't communicate effectively, which can lead to inefficient space utilization and potential issues with arranging objects in the most optimal way, especially in tight bin packing use-cases. The proposed methodology can address some of the above-mentioned challenges.

Generally described, the proposed methodology can enable a robotic pick system to make informed decisions about which object to pick from a pick scene by utilizing information about the placement area as well. Unlike the described state of the art that considers only an image of a pick bin to arrive at a decision to select an object, the proposed methodology utilizes, as input, a first image of a pick scene and a second image of a placement area. The pick scene may include a number of objects, which may be contained in a pick bin (as described herein), or otherwise disposed (e.g., on a table). The placement area may be configured to receive objects selectively picked from the pick scene by a robotic end effector. The placement area may comprise, for example, a place bin (as described herein), or may alternately comprise a tote, a pallet, or a container, among others. The placement area may be initially empty, and subsequently loaded one-by-one with objects picked from the pick scene by a robotic end effector. Objects may be initially placed on a floor of the placement area, and eventually stacked on top of other objects. The first and second images may be indicative of an instant state of the pick scene and the placement area respectively.

According to the proposed methodology, object masks are computed by performing instance segmentation based on the first image. Place region masks are computed by clustering locations in the second image based on a height level from a floor (or base) of the placement area. A "mask" generally refers to a group of pixels (e.g., denoting an object or a region) obtained via segmentation of an image. Based on the computed object and place region masks, a cost is computed for respective object-region pairs, where each object-region pair defines a pairing between an object mask and a place region mask. The cost for an object-region pair is defined at least in part by a place constraint. For example, the cost may be determined based on a heuristic including one or more cost components representing one or more place constraints. Examples of place constraints can include area utilization (minimizing unused space), stability of placed objects (e.g., avoiding collisions, rolling over, etc.), among others. An object to be picked from the pick scene is selected by selecting an object-region pair based on the computed cost. For example, the object-region pair with the maximum (or minimum) cost may be selected, depending on how the cost is defined. The methodology can ensure a more balanced and efficient operation that optimizes both the object selection and placement processes.

An inventive aspect of the proposed methodology resides in the integration of segmented place regions (masks) from the placement area into the object selection process. This integration can enable an accurate selection of the most suitable object to be picked which may also enhance the packing efficiency, in turn enhancing the overall performance of the end-to-end pick and place process. For example, by incorporating an area utilization cost component into the cost for an object-region pair, the proposed methodology can be used to achieve higher space utilization in the placement area, as the objects being picked can be chosen considering the available free regions in the placement area. As a result of higher space utilization, the number of bins needed to place a set of given objects can be significantly reduced.

Furthermore, according to the proposed methodology, the object selection process not only chooses the object but also identifies the paired place region. The place region mask in the selected object-region pair (output by the object selection process) can be directly utilized to compute a placement pose for placing the selected object in the placement area by the robotic end effector. By reducing the search space of place regions, the time required for the downstream place process to compute the optimal place pose can be significantly lessened. Consequently, the total cycle time for executing a real-time pick and place operation may be reduced, making the proposed methodology suitable for high-throughput applications.

Aspects of the disclosed methodology may be embodied as software executable by a processor. In some embodiments, aspects of the disclosed methodology may be suitably integrated into commercial artificial intelligence (AI)-based automation software products, such as SIMATIC Robot Pick AI™ developed by Siemens AG, among others.

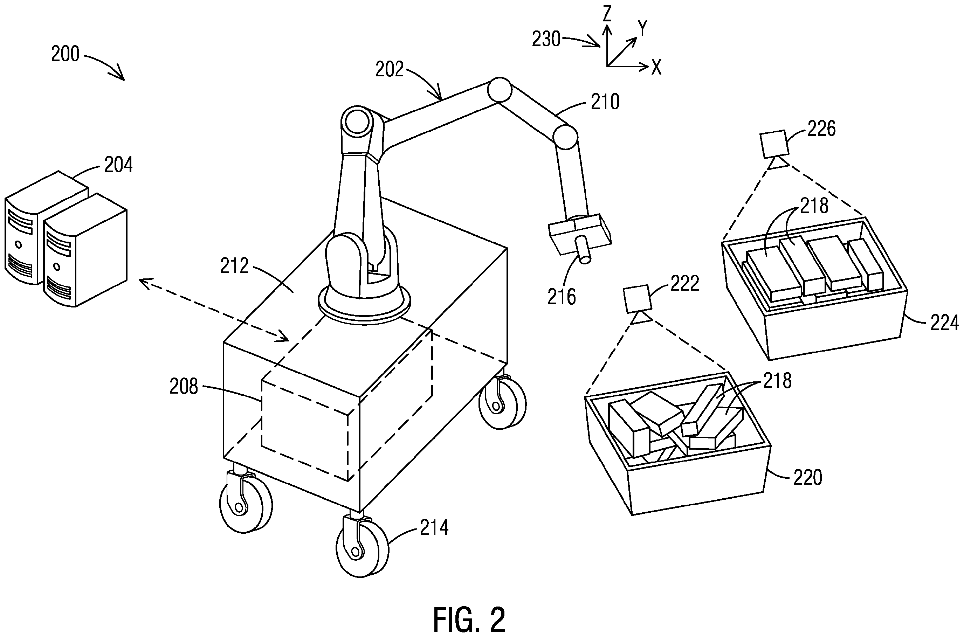

Turning now to the disclosed embodiments, FIG. 2 schematically illustrates an autonomous system 200 configured for performing placement informed robotic picking of objects according to one or more embodiments. The autonomous system 200 may be implemented, for example, in a factory setting. In contrast to conventional automation, autonomy gives each asset on the factory floor the decision-making and self-controlling abilities to act independently in the event of local issues. The autonomous system 200 comprises one or more robots, such as the robot 202, which can be controlled by computing system 204 to execute one or more industrial tasks. Examples of industrial tasks include assembly, transport, or the like.

The computing system 204 may comprise an industrial PC, or any other computing device, such as a desktop or a laptop, or an embedded system, among others. The computing system 104 can include one or more processors configured to process information and/or control various operations associated with the robot 202. In particular, the one or more processors may be configured to execute an application program, such as an engineering tool, for operating the robot 202.

To realize autonomy of the system 200, in one embodiment, the application program may be designed to operate the robot 202 to perform a task in a skill-based programming environment. In contrast to conventional automation, where an engineer is usually involved in programming an entire task from start to finish, typically utilizing low-level code to generate individual commands, in an autonomous system as described herein, a physical device, such as the robot 202, is programmed at a higher level of abstraction using skills instead of individual commands. The skills are derived for higher-level abstract behaviors centered on how the physical environment is to be modified by the programmed physical device. Illustrative examples of skills include a skill to grasp or pick up an object, a skill to place an object, a skill to open a door, a skill to detect an object, and so on.

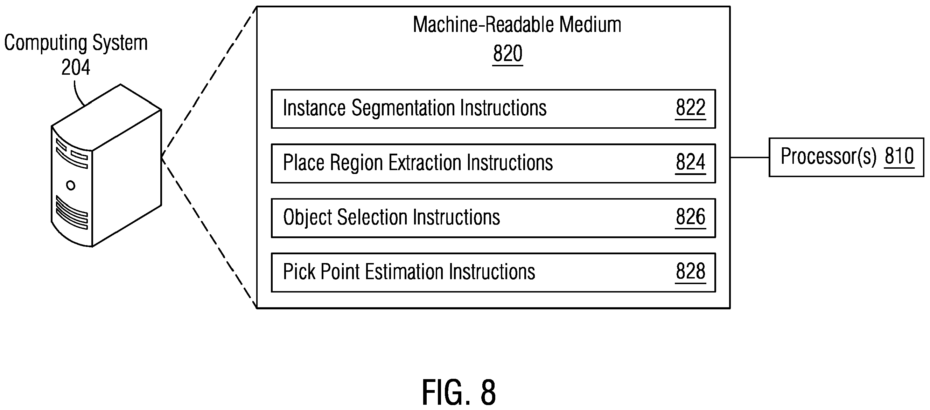

The application program may generate controller code that defines a task at a high level, for example, using skill functions as described above, which may be deployed to a robot controller 208. From the high-level controller code, the robot controller 208 may generate low-level control signals for one or more motors for controlling the movement of the robot 202, such as angular position of the robot arms, swivel angle of the robot base, and so on, to execute the specified task. In other embodiments, the controller code generated by the application program may be deployed to intermediate control equipment, such as programmable logic controllers (PLC), which may then generate low-level control commands for the robot 202 to be controlled. Additionally, the application program may be configured to directly integrate sensor data from physical environment in which the robot 202 operates. To that end, the computing system 204 may comprise a network interface to facilitate transfer of live data between the application program and various sensors, such as cameras 222, 226. An example of a computing system suitable for the present application is described hereinafter in connection with FIG. 8.

The robot 202 can include a robotic arm or manipulator 210 and a base 212 configured to support the robotic manipulator 210. The base 212 can include wheels 214 or can otherwise be configured to move within the physical environment 206. The robot 202 can further include an end effector 216 attached to the robotic manipulator 210. The end effector 216 may include a gripper configured to grasp (hold) and pick up an object 218. Examples of end effectors include vacuum-based grippers (suction cups), antipodal grippers (fingers or claws), magnetic grippers, among others. The robotic manipulator 210 can be configured to move so as to change the position of the end effector 216, to enable picking and moving objects 218 within the physical environment.

A robotic pick and place operation may involve picking objects 218 one-by-one from a pick bin 220 by the robotic manipulator 210, using the end effector 216, and placing them in a place bin 224. The objects 218 may be disposed in random poses within the pick bin 220. The objects 218 can be of assorted types or of the same type. The placement operation may involve placing the objects 218 in an orderly manner in the place bin 224, to achieve an efficient packing. The pick scene, which includes in this case the pick bin 220 containing cluttered objects 218, may be perceived via at least one first camera 222. Similarly, the place bin 224, including any object 218 placed therein, may be perceived via at least one second camera 226. The cameras 222, 226 may include, for example, RGB-D cameras, among others. In some embodiments, the pick and place bins may be perceived via a single camera movable between a first position above the pick bin 220 and a second position above the place bin 224.

Images acquired via camera(s) 222, 226 may be provided as input to a computing system, such the computing system 204. Based on the input images, the computing system 204 may select an object 218 to be picked from the pick bin 220 and estimate a pick point on the selected object 218, using the herein-described methodology. The estimated pick point may be outputted to a controller, such as the robot controller 208, to control the end effector 216 to pick the selected object 218. For example, as described above, the pick point may be output as high-level controller code to the controller, which may therefrom generate low-level commands to control movement of the end effector 216. After the selected object 218 has been successfully picked, a placement pose may be estimated by the computing system 204 for placing the selected object 218 in the place bin 224. The estimated placement pose may be likewise outputted to the controller 208 for controlling the end effector 216 to appropriately place the selected object 218 within the place bin 224.

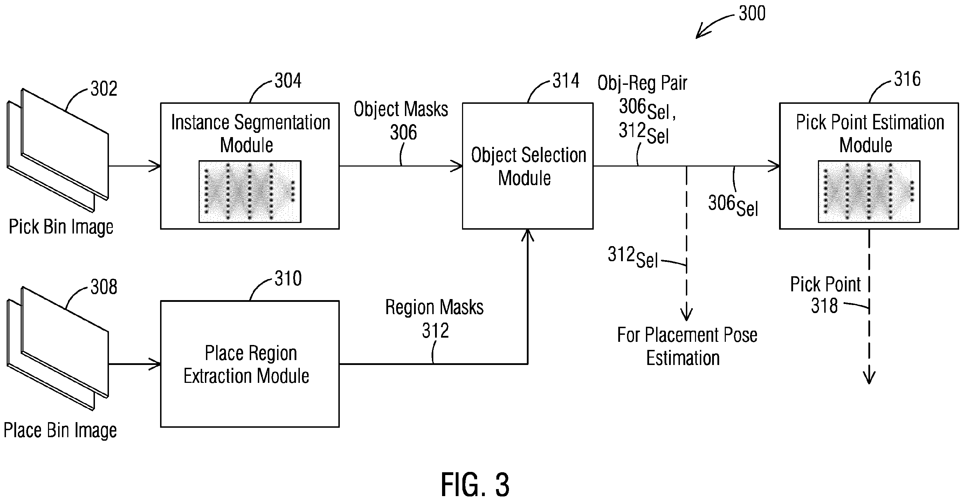

FIG. 3 illustrates a computer-implemented pick and place workflow 300 according to one or more embodiments. The various modules, such as the instance segmentation module 304, the place region extraction module 310, the object selection module 314 and the pick point estimation module 316, described herein, including components thereof, may be implemented by a computing system in various ways, for example, as hardware and programming. The programming for the modules 304, 310, 314, 316 may take the form of processor-executable instructions stored on non-transitory machine-readable storage mediums and the hardware may include processors to execute those instructions. For example, the programs may run on an industrial PC or on a smaller device (e.g., a controller) of an autonomous system. Furthermore, the processing capability may be distributed among multiple system components, such as among multiple processors and memories, optionally including multiple distributed processing systems or cloud/network elements.

Referring to FIG. 3, the proposed methodology includes acquiring a first image 302 of a pick scene including a number of objects, for example, disposed in a pick bin. According to disclosed embodiments, the first image 302 may include an image set comprising an intensity image and a corresponding depth image of the pick scene. The methodology further includes acquiring a second image 308 of a placement area, for example, comprising a place bin, configured to receive objects picked from the pick scene. According to disclosed embodiments, the second image 308 may include an image set comprising an intensity image and a corresponding depth image of the placement area. However, for the purpose of implementing the proposed methodology, it is sufficient that the second image 308 comprises at least a depth image of the placement area. In embodiments, the images 302, 308 are desirably acquired with a top-down view of the pick bin and the place bin respectively. The first image 302 and the second image 308 may define an input to the workflow 300.

An intensity image includes a two-dimensional representation of image pixels, where each pixel includes a single intensity value (monochrome image) or intensity values for a number of color components (color image). An example of a color intensity image is an RGB color image, which is an image including pixel intensity information in red, green and blue color channels. A depth image, also referred to as a depth map, includes a two-dimensional representation of image pixels that contains, for each pixel, a depth value. The depth values correspond to the distance of the surfaces of scene objects from a camera viewpoint. The intensity image and the corresponding depth image of a scene may be aligned pixel-wise. For this purpose, an RGB-D camera can be used, which may be configured to acquire an image with red-green-blue (RGB) color and depth (D) channels.

In some embodiments, one or both of the images 302, 308 may be obtained by acquiring a point cloud of the respective scene. A point cloud may include a set of points in a 3D coordinate system that represent a 3D surface or multiple 3D surfaces, where each point position is defined by its Cartesian coordinates in a real-world reference frame 230, and further by intensity values of color components (e.g., red, green and blue). A point cloud can thus include a colorized 3D representation of all surfaces in the respective scene. The point cloud can be converted into intensity (RGB) and depth images by applying a sequence of transforms based on the camera intrinsic parameters. Camera intrinsic parameters are parameters that allow a mapping between pixel coordinates in the 2D image frame and 3D coordinates in the real-world reference frame 230. Typically, the camera intrinsic parameters include the coordinates of the principal point or optical center, and the focal length along orthogonal axes.

Based on the first image 302, an instance segmentation module 304 may perform instance segmentation to detect objects in the pick scene and therefrom compute respective object masks 306. In particular, the intensity image of the pick scene may be utilized for this purpose. Instance segmentation essentially includes semantic segmentation and object detection with the added feature of identification of boundaries of the objects at the detailed pixel level. Given an input intensity image (e.g., an RGB color image), an instance segmentation model, such as a trained convolutional neural network, may be used to compute an instance segmentation mask (referred to as "object mask") corresponding to each object detected in the pick scene. Examples of instance segmentation models that can be used or adapted for the present purpose include instance segmentation using: "Segment Anything Model" (SAM) developed by Meta AI, "You Look Only Once" (YOLO) model, Mask Recurrent Convolutional Neural Network (Mask R-CNN), among others. Each object mask 306 computed by the instance segmentation model may include a group of pixels that are associated with a particular object.

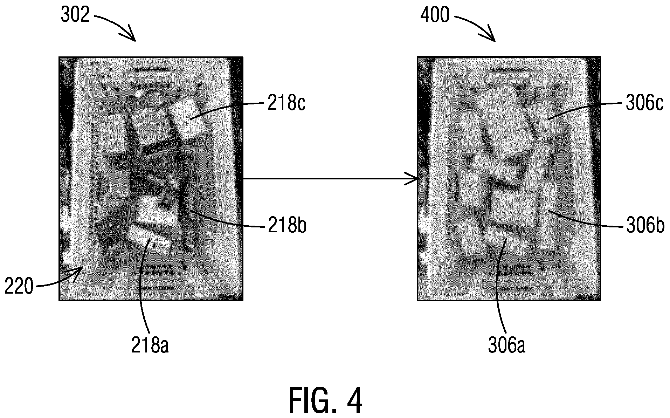

To illustrate, referring to FIG. 4, an input image 302 depicts a pick bin 220 containing a number of objects, including objects 218a, 218b, 218c, etc. The segmentation output 400 depicts object masks computed for each object detected in the pick bin image 302 using instance segmentation model. For example, the object mask 306a includes a group of pixels associated with the object 218a, the object mask 306b includes a group of pixels associated with the object 218b and the object mask 306c includes a group of pixels associated with the object 218c.

Continuing with reference to FIG. 3, based on the second image 308, a place region extraction module 310 may compute a number of place region masks 312 by segmenting regions which are at the same height forming a surface. The place region masks 312 may be computed by clustering locations in the image space of the second image 308 based on a height level from a floor (or base) of the placement area. This can be achieved by leveraging state-of-the-art clustering algorithms, such as density-based spatial clustering of applications with noise (DBSCAN), k-means, among others. Each place region mask 312 may thus represent a surface or a plane at a specific height level.

The second image 308 may include a depth map of the placement area where each pixel includes a depth value. The depth value of a pixel corresponds to the distance of the surface represented in the pixel from a camera viewpoint, which may be converted into a height from the floor of the placement area. To achieve this, the camera may be suitably positioned to capture a top-down view of the floor of the placement area. If the camera is positioned at an angle in relation to the floor of the placement area, the camera image may be suitably re-projected to compute the height from the depth value using known transformations. Each place region mask 312 computed by the clustering algorithm may be defined by a group of contiguous pixels having depth values that correspond to a specific height level from the floor of the placement area. The height level may represent a height value within a defined tolerance band.

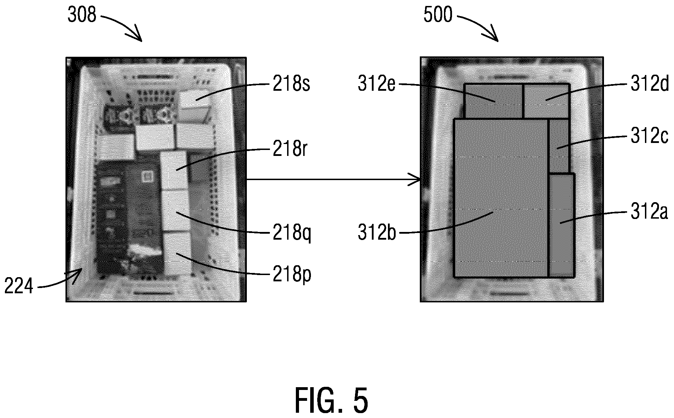

To illustrate, referring to FIG. 5, an input image 308 depicts a place bin 224 wherein a number of objects are already placed, including objects 218p, 218q, 218r, 218s, etc. The segmentation output 500 depicts five place region masks 312a, 312b, 312c, 312d, 312e computed by the place region extraction module 310 based on a depth map of the input image. Each of the place region masks 312a-e includes a group of contiguous pixels at a specific height level, defining a respective surface. As shown, the surface defined by each place region mask 312a-e may encompass a single object, or multiple adjacently placed objects having the same height, or no objects (i.e., floor of the place bin).

Still referring to FIG. 3, the computed object masks 306 and the place region masks 312 may be provided as input an object selection module 314. The object selection module 314 may compute a respective cost for each of a number of object-region pairs. Each object-region pair may include a pairing between an object mask 306 denoting an object from the pick scene and a place region mask 312 denoting a region on the placement area. The selection of an object to be picked by the robotic end effector may be made based on the computed costs for the object-region pairs. Unlike state-of-the-art methods where the object selection is based solely on pick constraints, in the disclosed embodiments, the object selection is based on a cost, computed per object-region pair, that includes at least one place constraint. This can ensure a more balanced and efficient operation of the system, optimizing both the object selection and the downstream placement process.

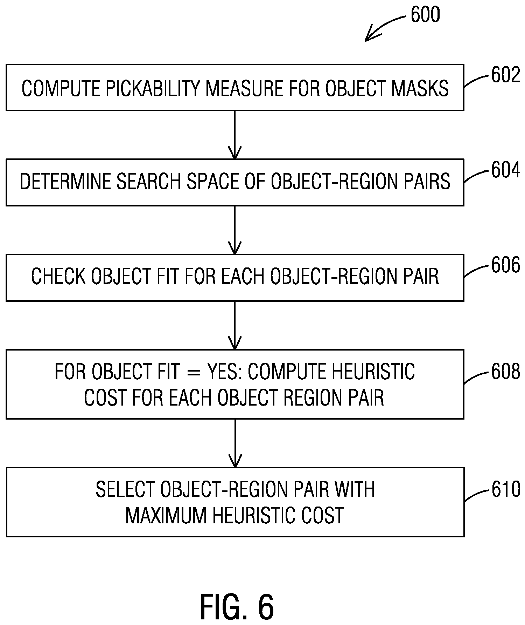

FIG. 6 illustrates a process 600 for selecting an object based on a place constraint according to one or more embodiments. Activity blocks 602-610 of the process 600 may be performed by a computing system including one or more processors. In one embodiment, the activity blocks 602-610 may be performed by the object selection module 314 of the herein-described computer implemented workflow 300. FIG. 6 is not intended to indicate that the activity blocks of the process 600 are to be executed in any particular order, or that all of the activity blocks of the process 600 are to be included in every case. Additionally, the process 600 can include any suitable number of additional operations.

At block 602, a pickability measure may be computed for each object mask 306. The pickability measure may be indicative of a success of pick for the particular object associated with the object mask 306. The pickability measure may guide the object selection to be performed such that the object being picked is not occluded. This way, the chances for pick success can be maximized, by minimizing object friction forces. At the same time, it may be ensured that the topmost objects are not accidentally pulled outside of the bin. The pickability measure of an object mask 306 may include, for example, a pickability score for the object mask, or a binary label ("pickable" or "not pickable") for the object mask, or a rank of the object mask, or any combination thereof.

The pickability measure for each object mask 306 may be computed utilizing depth information from a corresponding depth map. For example, the object masks 306 computed by the instance segmentation model may be used to segment the pixel-wise aligned depth map of the pick scene. The pickability measure of the object mask 306 may then be computed based on the corresponding segmented depth map. This can be accomplished in a number of ways.

For example, in one embodiment, a heuristic may be used to compute the pickability measures of the object masks using the corresponding segmented depth maps. In most cases, the object to be picked is desirably the topmost object, which is usually not occluded. To uncover the topmost object, the depth of the object (e.g., derived from the depth map) may provide the strongest signal. The heuristic may, accordingly, include a depth measure of the object mask. The depth measure may include, for example, the average or the maximum or the minimum depth values of pixels in the object mask, or any combination thereof. Also, it may often be desirable to get larger objects out of the way sooner than later. Accordingly, the heuristic may also include a size measure of the object mask. The size measure may be defined, for example, by an area covered by all the pixels of the object mask. In one implementation, the heuristic may include a combination (e.g., a weighted combination) of the depth measure of the object mask, the size of the object mask and the confidence of the predicted object mask, to determine a pickability measure of each object mask. The result may be one object mask, a list of ranked object masks or a list of individually labeled object masks with binary labels ("pickable" or "not pickable").

In another embodiment, a trained neural network or other machine learning model may be used to compute the pickability measures of the object masks 306 using the corresponding segmented depth maps. The neural network/machine learning model may likewise provide an output including binary labels for each mask ("pickable" or not "pickable") or a ranking of object masks from most pickable to least pickable.

At block 604, a search space of object-region pairs may be determined. To arrive at the most optimal solution for selecting an object, an exhaustive search space of object-region pairs may be determined. In this case, the search space may include all possible object-region pairs from the entirety of the computed object masks 306 and the computed place region masks 312. However, in practice, especially in use-cases involving very large number of objects, it may be desirable to improve computational efficiency and cycle time by constraining the search space. This may be achieved by choosing the object-region pairs from only a subset of the computed object masks 306 and/or a subset of the computed place region masks 312.

In one embodiment, the pickability measures of the object masks 306 (e.g., as determined at block 602) may be utilized to select a subset of the computed object masks 306 for determining the search space. For example, if the pickability measure includes a binary label ("pickable" or not "pickable"), this step may be relatively straightforward, wherein only the object masks 306 with the label "pickable" may be selected. If the pickability measure includes a score or a rank, a cut-off score/rank may be defined to select the subset of the computed object masks 306. Additionally, or alternatively, the search space may be also constrained based on an ordering of the object masks 306 based on size and/or an ordering of the place region masks 312 based on size. The size of a mask may be defined in terms of a pixel area. Thus, the search space may be determined by selecting a subset of the computed object masks 306 based on pixel area and/or a subset of the computed place region masks 312 based on pixel area.

Prior to computing the cost for an object-region pair, it may be valuable to confirm whether the object can be placed anywhere in the region. At block 606, an object fit check may be performed to determine if a kernel defined by the object mask 306 fits within an area defined by the place region mask 312 of the object-region pair. The object's kernel may be defined, for example, as a two-dimensional array with all entries assigned "1", the dimensions of the array being equal to the dimensions (in pixels) of the object mask 306. In one embodiment, the object fit check may involve a convolution operation, wherein the object's kernel is convolved over the place region mask 312 to determine whether the kernel can fit completely anywhere within the place region mask 312 (without collision with other regions). The convolution operation may be performed for different orientations of the object's kernel, for example 0 and 90 degrees. Before performing this operation, it may be ensured that the object's kernel and the place region mask have the same scaling factor/resolution. Block 606 may ensure that the object can indeed be accommodated in the potential place region before any further computations are performed.

At block 608, a cost may be computed for each object-region pair in the search space for which an object fit has been determined, i.e., object-region pairs where the object's kernel can fit within the area of the place region mask. For example, the cost may be determined based on a heuristic including one or more cost components representing one or more place constraints. Examples of place constraints can include area utilization (minimizing unused space), stability of placed objects (e.g., avoiding collisions, rolling over, etc.), among others.

In one embodiment, the heuristic cost for an object-region pair may include a first cost component representing a first place constraint, namely, area utilization. When a new object is placed in a region and the region's size exceeds that of the object, there will be leftover, unused space. To achieve compact packing, the object and region should be selected in a manner that minimizes this unused space. The first cost component may be accordingly defined such that it is indicative of utilization of an area of the place region mask 312 by the object mask 306 in the given object-region pair. For example, the first cost component may be defined by an area factor calculated as a ratio of a pixel area of the object mask 306 to a pixel area of the place region mask 312 in the given object-region pair. That is:

$$\text{Area factor} = \text{Pixel area of the object mask} \, / \, \text{Pixel area of the region mask} \qquad (1)$$

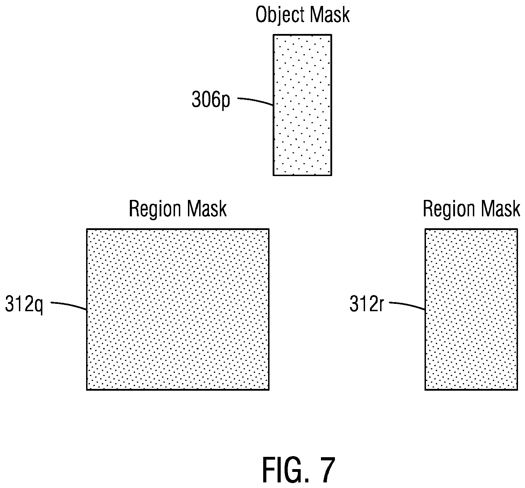

The area factor provides a heuristic estimate of the spatial efficiency of placing a particular object within a specific region, thus guiding the object selection process towards maximizing space utilization. To illustrate, in the scenario shown in FIG. 7, there can be two object-region pairs, namely a first pair including object mask 306p and place region mask 312q, and a second pair including object mask 306p and place region 312r. Based on equation (1), the second object-region pair 306p, 312r will have a higher area factor, and hence a higher cost, which may encourage the object selection process to prioritize the second object-region pair 306p, 312r over the first object-region pair 306p, 312q.

In a further embodiment, the heuristic cost for an object-region pair may also include a second cost component representing a second place constraint, namely, stability. The stability constraint may ensure that the placed objects remain in position. Experimental observations suggest that stability is often dependent on the height level. Accordingly, the second cost component may be indicative of a height level of the place region mask 312 in the given object-region pair.

Each place region within the placement area has a specific height level. Experimental observations suggest that populating objects at a lower height level before moving on to higher height levels minimizes potential collisions and rollovers and also results in superior space utilization. Therefore, the second cost component may be defined such that lower height levels carry higher cost (and vice versa). The second cost component may thereby encourage the object selection process to prioritize objects that can be accommodated at the lower height levels before moving on to the ones at higher height levels.

In some embodiments, the heuristic cost may include a weighted combination, such as a weighted sum, of the first and second cost components. The weights assigned to the respective cost components may be chosen depending on the use-case. For example, the stability constraint can be critical in use-cases involving packing of fragile objects. Accordingly, a relatively higher weight can be assigned to the second cost component in such use-cases. In contrast, for example, in use-cases involving packing of generally flat objects, space utilization may be more important. A relatively higher weight can be assigned to the first cost component in such use-cases. In various embodiments, depending on the use-case, the heuristic cost can additionally or alternately include one or more other cost components representative of one or more other place constraints.

Still referring to FIG. 6, at block 608, the cost for each object-region pair may additionally incorporate a pickability measure of the object mask 306 in the given object-region pair. The pickability measure may be determined as described in connection with block 602. The pickability measure may be incorporated in the heuristic cost in several possible ways. By way of example, the pickability measure (e.g., score or rank) may be incorporated by a weighted addition into the above-described heuristic cost. As another example, in case of binary labels ("pickable"=1 or "not pickable"=0), the pickability measure can be incorporated as a multiplier into the above-described heuristic cost. In some embodiments, especially where the pickability measure was used to already constrain the search space (e.g., by selecting only object masks with the binary label "pickable"), it may not be necessary to incorporate a pickability measure subsequently in the heuristic cost. In that case, the heuristic cost may be computed using only the place constraint(s), as described above.

At block 610, an object to be picked from the pick scene is selected by selecting an object-region pair based on the computed heuristic cost. For example, according to the disclosed embodiments, the object-region pair with the maximum cost may be selected. In other embodiments, depending on how the heuristic cost is defined, object-region pair with the minimum cost may be selected.

Referring again to FIG. 3, the output of the object selection module 314 may include a selected object-region pair, including an object mask $306_{Sel}$ and a paired place region mask $312_{Sel}$.

The object mask $306_{Sel}$ may be utilized by a pick point estimation module 316 to estimate a pick point for the robotic end effector. In one embodiment, the pick point estimation module 316 may comprise a grasp neural network to compute a grasp location for the end effector to pick up the selected object. Grasp neural networks are often convolutional, such that the networks can label each pixel of an input image with some type of grasp affordance metric, referred to as grasp score. The input image in this case may include a segmented depth map of the pick scene computed using the object mask $306_{Sel}$. The grasp score of a pixel may be indicative of a quality of grasp at the location defined by the pixel, which typically represents a confidence level for carrying out a successful grasp (e.g., without dropping the object). Based on the pixel-wise grasp scores, an optimal grasping location for the end effector may be determined as the pick point, based on defined constraints (e.g., avoiding collision with a bin wall). The grasp neural network may be trained on a dataset comprising depth maps of objects or scenes from a variety of camera positions and ground truth labels that include pixel-wise grasp scores for a given type of gripper of the end effector.

In other embodiments, the pick point may be modeled using a key point in the object mask $306_{Sel}$. Key point detection can be performed from intensity images, for example using neural networks, which may be embedded in the instance segmentation model or be a standalone model. Alternatively, non-deep learning methods may be employed to model the pick point. As an example, the centroid of the object mask $306_{Sel}$ may be used to model the pick point.

The output 318 of the pick point estimation module 316 may include the coordinates (X, Y, Z) of the pick point in the real-world reference frame 230. To compute the coordinates (X, Y, Z), the pick point computed on the two-dimensional image space of the object mask $306_{Sel}$ may be projected onto a three-dimensional space of the real-world reference frame 230 using the depth information from the segmented depth map and the camera intrinsic parameters. The output 318 may also include an approach vector computed based on the pick point, which specifies a direction of approach. For example, if the pick point is located on a flat surface, the direction of approach may be computed as a normal vector to the surface. The output 318 including the pick point coordinates (X, Y, Z) and the approach vector may be provided to a controller to control the robotic end effector to pick the selected object.

The place region mask $312_{Sel}$ of the selected object-region pair may be utilized by a downstream placement pose estimation process. After the selected object is successfully picked, the place region mask $312_{Se1}$, along with information on the selected object such as the estimated planar dimensions and the grasp offset, may be provided as inputs for the placement pose estimation process. The placement pose estimation process may employ known techniques for computing an optimal placement pose based on the above-mentioned inputs. However, by limiting the search space of available regions in the placement area to the place region mask $312_{Sel}$ already computed by the object selection module 314, the time required to compute the optimal placement pose can be significantly lessened, contributing to a reduction of overall cycle time.

FIG. 8 shows an example of a computing system 204 that can support placement informed robotic picking of objects according to disclosed embodiments. The computing system 204 may be embodied, for example and without limitation, as an industrial PC with a Linux operating system, for executing real-time control of a robot. The computing system 204 includes at least one processor 810, which may take the form of a single or multiple processors. The processor(s) 810 may include a one or more CPUs, GPUs, microprocessors, or any hardware devices suitable for executing instructions stored on a memory comprising a machine-readable medium. The computing system 204 further includes a machine-readable medium 820. The machine-readable medium 820 may take the form of one or more media including any non-transitory electronic, magnetic, optical, or other physical storage device that stores executable instructions, such as instance segmentation instructions 822, place region extraction instructions 824, object selection instructions 826 and pick point estimation instructions 828, as shown in FIG. 8. As such, the machine-readable medium 820 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The computing system 204 may execute instructions stored on the machine-readable medium 820 through the processor(s) 810. Executing the instructions (e.g., the instance segmentation instructions 822, the place region extraction instructions 824, the object selection instructions 826 and the pick point estimation instructions 828) may cause the computing system 204 to perform any of the technical features described herein, including according to any of the features of the instance segmentation module 304, the place region extraction module 310, the object selection module 314 and the pick point estimation module 316, described above.

The systems, methods, devices, and logic described above, including the instance segmentation module 304, the place region extraction module 310, the object selection module 314 and the pick point estimation module 316, may be implemented in many different ways in many different combinations of hardware, logic, circuitry, and executable instructions stored on a machine-readable medium. A product, such as a computer program product, may include a storage medium and machine-readable instructions stored on the medium, which when executed in an endpoint, computer system, or other device, cause the device to perform operations according to any of the description above, including according to any features of the instance segmentation module 304, the place region extraction module 310, the object selection module 314 and the pick point estimation module 316. Computer readable program instructions described herein can be downloaded to respective computing/processing devices from a computer readable storage medium or to an external computer or external storage device via a network, for example, the Internet, a local area network, a wide area network and/or a wireless network.

The processing capability of the systems, devices, and modules described herein, including the instance segmentation module 304, the place region extraction module 310, the object selection module 314 and the pick point estimation module 316 may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

Although this disclosure has been described with reference to particular embodiments, it is to be understood that the embodiments and variations shown and described herein are for illustration purposes only. Modifications to the current design may be implemented by those skilled in the art, without departing from the scope of the patent claims.

**Claims**

1. A method for performing placement informed robotic picking of objects, comprising:

   acquiring a first image (302) of a pick scene (220) including a number of objects (218),
   acquiring a second image (308) of a placement area (224) configured to receive objects (218) selectively picked from the pick scene (220) by a robotic end effector (216),
   based on the first image (302), computing object masks (306) by performing instance segmentation, wherein each object mask (306) represents a particular object detected in the pick scene (220),
   based on the second image (308), computing place region masks (312) by clustering locations in the second image (308) based on a height level from a floor of the placement area (224), wherein each place region mask (316) represents a surface at a specific height level,
   based on the computed object masks (306) and place region masks (312), computing a cost for respective object-region pairs (306, 312), each object-region pair (306, 312) defining a pairing between an object mask (306) and a place region mask (312), the cost defined at least in part by one or more place constraints, and
   selecting an object (218) to be picked from the pick scene (220) by the robotic end effector (216) by selecting an object-region pair ($306_{Sel}$, $312_{Sel}$) based on the computed cost.

2. The method according to claim 1, wherein the second image (308) comprises a depth map, and wherein each computed place region mask (32) is defined by a group of contiguous pixels having depth values that correspond to a specific height level from the floor of the placement area (224).

3. The method according to any of claims 1 and 2, wherein the cost for an object-region pair (306, 312) includes a first cost component representing a first place constraint of the one or more place constraints, the first cost component indicative of a utilization of an area of the place region mask (312) by the object mask (306) in the given object-region pair (306, 312).

4. The method according to claim 3, wherein the first cost component is defined by a ratio of a pixel area of the object mask (306) to a pixel area of the place region mask (312) in the given object-region pair (306, 312).

5. The method according to any of claims 3 and 4, wherein the cost for an object-region pair further includes a second cost component representing a second place constraint of the one or more place constraints, the second cost component indicative of a height level of the place region mask (312) in the given object-region pair (306, 312).

6. The method according to claim 5, wherein the cost for an object-region pair (306, 312) includes a weighted combination of the first and second cost components.

7. The method according to any of claims 1 to 6, comprising, prior to computing the cost for an object-region pair (306, 312), performing a check to determine if a kernel defined by the object mask (306) fits within an area defined by the place region mask (312) of the object-region pair (306, 312).

8. The method according to any of claims 1 to 7, comprising computing, for each object mask (306), a pickability measure indicative of a success of pick, wherein the cost for an object-region pair (306, 312) incorporates the pickability measure of the object mask (306) in the given object-region pair (306, 312).

9. The method according to any of claims 1 to 8, comprising computing, for each object mask (306), a pickability measure indicative of a success of pick, wherein a search space of object-region pairs (306, 312) for computing the cost is determined using a subset of the computed object masks (306), which are selected based on the computed pickability measures.

10. The method according to any of claims 8 and 9,

    wherein the first image (302) comprises an intensity image and a depth map of the pick scene (220),

wherein the object masks (306) are computed by performing instance segmentation based on the intensity image, and

wherein, for each object mask (306), the pickability measure is computed utilizing depth information obtained from the depth map of the pick scene (220).

11. The method according to any of claims 1 to 10, wherein a search space of object-region pairs (306, 312) for computing the cost is determined using a subset of the computed object masks (306) and/or a subset of the computed place region masks (312), which are selected respectively based on an ordering of the object masks (306) based on size and/or an ordering of the place region masks (312) based on size.

12. The method according to any of claims 1 to 11, further comprising:

estimating a pick point (318) for the robotic end effector utilizing the object mask ($306_{Sel}$) in the selected object-region pair ($306_{Sel}$, $312_{Sel}$), and

outputting the estimated pick point (318) to a controller (208) to control the robotic end effector (216) to pick the selected object (218).

13. The method according to any of claims 1 to 12, wherein the place region mask ($312_{Sel}$) in the selected object-region pair ($306_{Sel}$, $312_{Sel}$) is utilized to compute a placement pose for placing the selected object (218) in the placement area (224) by the robotic end effector (216).

14. A non-transitory computer-readable storage medium including instructions that, when processed by one or more processors, configure the one or more processors to perform the method according to any one of claims 1 to 13.

15. An autonomous system (200) configured for performing placement informed robotic picking of objects, comprising:

a robot (202) comprising an end effector (216),

one or more cameras (222, 226) configured to acquire a first image (302) of a pick scene (220) including a number of objects (218), and acquire a second image (308) of a placement area (224) configured to receive objects (218) selectively picked from the pick scene (220) by the end effector (216), one or more processors (810), and memory (820) storing instructions executable by the one or more processors (810) to:

based on the first image (302), compute object masks (306) by performing instance segmentation, wherein each object mask (306) represents a particular object detected in the pick scene (220),

based on the second image (308), compute place region masks (312) by clustering locations in the second image (308) based on a height level from a floor of the placement area (224), wherein each place region mask (316) represents a surface at a specific height level,

based on the computed object masks (306) and place region masks (312), compute a cost for respective object-region pairs (306, 312), each object-region pair (306, 312) defining a pairing between an object mask (306) and a place region mask (312), the cost defined at least in part by one or more place constraints, and

select an object (218) to be picked from the pick scene (220) by the end effector (216) by selecting an object-region pair ($306_{Sel}$, $312_{Sel}$) based on the computed cost.

Place Bin

Place Regions

H4 (30 cm)

H3 (24 cm)

H2 (12 cm)

H1 (2 cm)

Pick Bin

Object 1

Object 2

FIG. 1

FIG. 2

EP 4 606 533 A1

FIG. 3

EP 4 606 533 A1

FIG. 4

EP 4 606 533 A1

FIG. 5

**FIG. 6**

Object Mask

306p

Region Mask

312q

Region Mask

312r

FIG. 7

**FIG. 8**

EP 4 606 533 A1

<table>
<tr><td colspan="2">Europäisches<br>Patentamt<br>European<br>Patent Office<br>Office européen<br>des brevets</td><td align="center">**EUROPEAN SEARCH REPORT**</td><td>**Application Number**<br><br>EP 24 15 8595</td></tr>
</table>

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 10 679 379 B1 (DIANKOV ROSEN NIKOLAEV [JP] ET AL) 9 June 2020 (2020-06-09)<br>* claim 1 *<br>* figures 3a-7 *<br>* column 12, line 49 - column 16, line 22 * | 1-15 | INV.<br>B25J9/16 |
| Y | US 2022/410381 A1 (STOPPI GUY MICHAEL [CA] ET AL) 29 December 2022 (2022-12-29)<br>* figures 1a, 3a, 3b *<br>* claim 1 *<br>* paragraph [0173] * | 1-15 | |
| Y | US 2023/286165 A1 (GAISSER FLORIS [JP]) 14 September 2023 (2023-09-14)<br>* figures 3a, 4 *<br>* claims 1-3 *<br>* paragraph [0120] * | 1-15 | |

**TECHNICAL FIELDS SEARCHED (IPC)**

B25J
G05B

The present search report has been drawn up for all claims

| Place of search | Date of completion of the search | Examiner |
|---|---|---|
| The Hague | 16 July 2024 | Lorenzo Barreiro, M |

EPO FORM 1503 03.82 (P04C01)

## ANNEX TO THE EUROPEAN SEARCH REPORT
## ON EUROPEAN PATENT APPLICATION NO.

EP 24 15 8595

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | | Publication date | Patent family member(s) | | Publication date |
|---|---|---|---|---|---|
| US 10679379 | B1 | 09-06-2020 | CN | 112009812 A | 01-12-2020 |
| | | | DE | 102019009206 A1 | 18-02-2021 |
| | | | DE | 102019130902 A1 | 03-12-2020 |
| | | | JP | 6704157 B1 | 03-06-2020 |
| | | | JP | 2020196118 A | 10-12-2020 |
| | | | JP | 2020196124 A | 10-12-2020 |
| | | | KR | 20200138072 A | 09-12-2020 |
| | | | KR | 20220106091 A | 28-07-2022 |
| | | | US | 10679379 B1 | 09-06-2020 |
| | | | US | 2020380722 A1 | 03-12-2020 |
| | | | US | 2023008946 A1 | 12-01-2023 |
| US 2022410381 | A1 | 29-12-2022 | US | 2022410381 A1 | 29-12-2022 |
| | | | WO | 2023278550 A1 | 05-01-2023 |
| US 2023286165 | A1 | 14-09-2023 | CN | 116728400 A | 12-09-2023 |
| | | | JP | 7408107 B2 | 05-01-2024 |
| | | | JP | 2023131162 A | 21-09-2023 |
| | | | JP | 2024015358 A | 01-02-2024 |
| | | | US | 2023286165 A1 | 14-09-2023 |

EPO FORM P0459

For more details about this annex : see Official Journal of the European Patent Office, No. 12/82